# FASCICULE DE BREVET EUROPEEN

(11) **EP 3 450 859 B1**
(45) Date de publication et mention de la délivrance du brevet: **30.09.2020**
(21) Numéro de dépôt: 18191538.0
(22) Date de dépôt: 29.08.2018
(51) Int. Cl.: F24D 17/00, F24D 19/10

(54) **INSTALLATION DE PRODUCTION D'EAU CHAUDE SANITAIRE INTEGRANT UN PRECHAUFFAGE PAR ENERGIE RECUPEREE**
SANITÄRANLAGE ZUR WARMWASSERERZEUGUNG, DIE EINE VORHEIZUNG MIT ZURÜCKGEWONNENER ENERGIE UMFASST
FACILITY FOR PRODUCING DOMESTIC HOT WATER INTEGRATING PREHEATING BY RECOVERED ENERGY

(30) Priorité: 29.08.2017 FR 1757964
(43) Date de publication de la demande: 06.03.2019
(73) Titulaire: SPIREC, 78500 Sartrouville (FR)
(72) Inventeur: REKUT, Jérôme, 78250 Hardricourt (FR)
(74) Mandataire: Oudin, Stéphane

(56) Documents cités:
- DE-U1-202012 008 863
- FR-A1- 2 976 347
- FR-A1- 3 019 631
- FR-A1- 3 034 849

## Description

### Domaine technique

La présente invention concerne le domaine général de la production d'eau chaude sanitaire (ECS). L'invention concerne plus particulièrement une installation de production d'ECS intégrant un préchauffage.

### Technique antérieure

Dans le domaine des installations de production d'ECS intégrant un préchauffage, on connaît déjà des installations munies de préparateur d'ECS comprenant notamment des échangeurs thermiques mis en place sur la boucle d'ECS et associés à une chaudière et/ou à un ballon de stockage primaire pour diminuer la puissance de ladite chaudière.

Ce type d'installations est certes efficace, mais il ne permet pas toujours de:
- garantir, en période de puisage, une eau chaude sanitaire à 60°C en sortie du préparateur,
- réchauffer, en période de non-tirage, la boucle pour éviter que l'ECS puisse descendre en dessous de 50°C ce qui favoriserait le développement de bactéries telles que la légionnelle,
- éviter l'entartrage,
- faciliter l'équilibrage du réseau même en cas de tirage, et
- utiliser de l'énergie récupérée pour entre autres le maintien en température de la boucle et le préchauffage du tirage.

Par ailleurs, ces installations connues ne sont pas adaptées aux évolutions normatives (projet RT2020) qui visent à réduire la consommation énergétique en récupérant des calories pour chauffer l'ECS, partout où cela est possible et notamment au niveau des groupes froids (Climatisation, frigo ...) ou même des panneaux solaires.

Le document FR 2 976 347A1 divulgue une installation ayant les caractéristiques du préambule de la revendication 1.

### Exposé de l'invention

Le but de la présente invention est donc de pallier les inconvénients précédemment cités en proposant une installation de production d'ECS intégrant un préchauffage de l'ECS capable d'utiliser de l'énergie récupérée afin de réduire sa consommation énergétique tout en intégrant des fonctions anti-entartrage, anti-légionnelle et absence de pertes de charge sur la boucle d'ECS afin d'en faciliter l'équilibrage même en période de tirage d'ECS.

A cet égard, la présente invention a pour objet une installation de production ECS selon la revendication 1. L'installation comporte au moins:
un premier échangeur thermique (5) et un deuxième échangeur thermique (10) :
   - un premier circuit primaire comportant un dispositif de production d'eau chaude et une pompe permettant de faire circuler de l'eau chaude dans la partie primaire dudit premier échangeur thermique, nommé ci-après échangeur de chauffage,
   - un deuxième circuit primaire comprenant une boucle de récupération d'énergie et étant alimenté en eau provenant de ladite boucle de récupération d'énergie, le deuxième circuit primaire comprenant en outre une pompe permettant de faire circuler l'eau vers la partie primaire dudit deuxième échangeur, nommé ci-après échangeur de préchauffage, et de boucler sur celui-ci, et
   - un circuit secondaire comportant une boucle d'ECS, une pompe de bouclage assurant la circulation de l'eau chaude sanitaire dans toute la boucle d'ECS, et une entrée d'eau froide, ladite eau froide passant d'abord, via une première branche, dans le circuit secondaire de l'échangeur de préchauffage du deuxième circuit primaire pour être préchauffée, puis, via une deuxième branche, dans le circuit secondaire de l'échangeur de chauffage du premier circuit primaire pour arriver à la température réglementaire de l'ECS, avant d'être distribuée dans ladite boucle d'ECS au point de distribution par une troisième branche du circuit secondaire,
l'installation étant remarquable en ce qu'elle comporte un module de recyclage permettant de prélever, en aval dudit point de distribution, une partie de l'ECS de la boucle d'ECS pour permettre une circulation permanente d'ECS dans le circuit secondaire de l'échangeur de chauffage.

Ledit module de recyclage permet également d'envoyer ponctuellement une partie de l'ECS de la boucle d'ECS dans l'échangeur de préchauffage.

Le module de recyclage comprend avantageusement une pompe de recirculation et une vanne trois voies disposée en aval de ladite pompe de recirculation et permettant d'orienter le débit provenant de cette dernière vers le circuit secondaire de l'échangeur de chauffage, via une première branche se raccordant à la deuxième branche du circuit secondaire, ou bien vers le circuit secondaire de l'échangeur de préchauffage, via une deuxième branche se raccordant à la première branche du circuit secondaire.

Selon une variante de réalisation avantageuse, l'installation comporte un module de choc thermique interne permettant de faire circuler de l'eau provenant de la boucle d'ECS dans le circuit secondaire de l'échangeur de chauffage du premier circuit primaire, dans le circuit secondaire de l'échangeur de préchauffage du deuxième circuit primaire, puis dans l'entrée d'eau froide, et enfin retour dans la boucle d'ECS.

De manière préférée, le module de recyclage est associé à une vanne d'équilibrage de débit disposée entre l'entrée du circuit secondaire de l'échangeur de chauffage et la première branche dudit module de recyclage et permettant de contrôler le débit de recirculation de l'ECS dans le circuit secondaire dudit échangeur de chauffage.

L'installation comporte avantageusement un fluxostat ou tout autre dispositif disposé à l'aval de l'entrée d'eau froide du circuit secondaire et permettant de déterminer si de l'eau froide arrive par ladite entrée d'eau froide.

De manière avantageuse, le premier circuit primaire comporte une vanne mélangeuse disposée entre la sortie du dispositif de production d'eau chaude et l'entrée du circuit primaire de l'échangeur de chauffage, et gérant la puissance utile de l'échangeur de chauffage en faisant recirculer en plus ou moins grande proportion une partie de l'eau provenant de la sortie du circuit primaire dudit échangeur de chauffage sur lui-même, de sorte à faire varier la température de l'eau à l'entrée dudit circuit primaire.

L'installation comporte alors un thermostat de sécurité disposé en aval du point de distribution sur la boucle d'ECS, ledit thermostat de sécurité coupant la pompe du premier circuit primaire et fermant la vanne mélangeuse dudit premier circuit primaire en cas de surchauffe de l'ECS dans ladite boucle d'ECS.

De manière préférée, l'installation comporte une régulation permettant de gérer au moins :
- l'ouverture de la vanne mélangeuse dudit premier circuit primaire en fonction de la température de départ ECS dans la boucle d'ECS,
- le débit de la pompe du deuxième circuit primaire en fonction de la température de sortie de l'échangeur de préchauffage.

En présence d'eau calcaire, l'installation comporte avantageusement un module de recyclage complémentaire sur l'échangeur de préchauffage, afin d'assurer un débit de circulation minimum dans celui-ci.

Ce module de recyclage complémentaire comprend de préférence une branche reliant entre elles les première et deuxième branches du circuit secondaire respectivement en aval de la deuxième branche et en amont de la première branche du module de recyclage, une pompe de recirculation disposée sur ladite branche du module de recyclage complémentaire et permettant de prélever de l'eau préchauffée en aval de l'échangeur de préchauffage pour permettre une circulation permanente de cette eau dans le circuit secondaire dudit échangeur de préchauffage, afin d'éviter l'entartrage de ce dernier.

Ce module de recyclage complémentaire est associé avantageusement à une vanne d'équilibrage de débit disposée à l'entrée du circuit secondaire de l'échangeur de préchauffage et permettant de contrôler le débit de recirculation dans le circuit secondaire dudit échangeur de préchauffage.

### Description sommaire des figures

D'autres avantages et caractéristiques ressortiront mieux de la description qui va suivre, d'un exemple particulier de réalisation, donné à titre d'illustration non limitative, d'une installation de production d'ECS conforme à l'invention, en référence aux figures annexées sur lesquelles :
- la figure 1 est une vue schématique d'une installation de production d'ECS conforme à l'invention ;
- la figure 2 est une vue schématique d'une variante de réalisation de l'installation de production d'ECS de la figure 1.
- la figure 3 est une vue schématique d'une autre variante de réalisation de l'installation de production d'ECS de la figure 1.

### Meilleure manière de réaliser l'invention technique

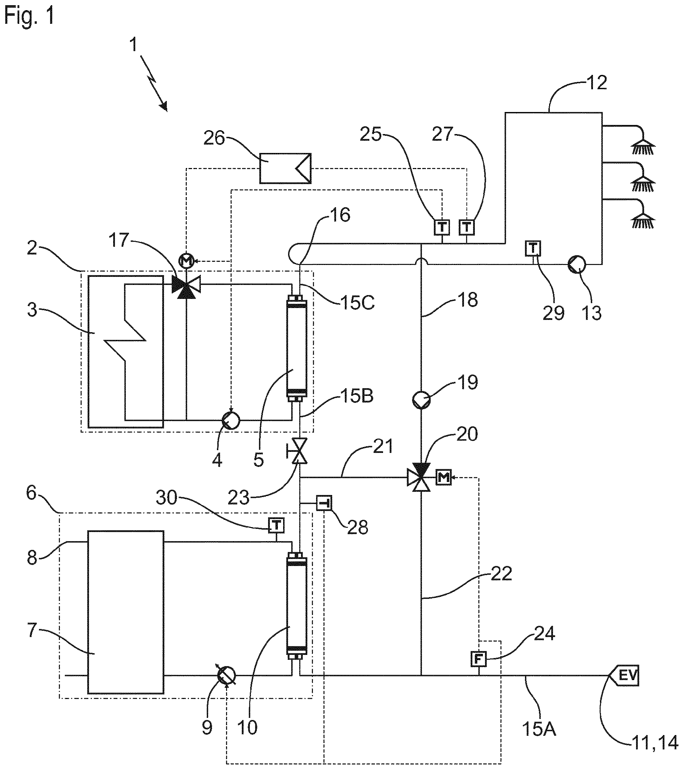

En référence à la figure 1 et conformément à l'invention, on a représenté schématiquement une installation 1 de production d'ECS (ECS : eau chaude sanitaire) comprenant au moins :
- un premier circuit primaire 2, délimité en trait mixte sur les figures, comportant un dispositif de production d'eau chaude 3, tel que par exemple une chaudière à gaz, et une pompe 4 permettant de faire circuler de l'eau chaude dans la partie primaire d'un premier échangeur thermique 5, nommé ci-après échangeur de chauffage 5,
- un deuxième circuit primaire 6, délimité en trait mixte sur les figures, comportant avantageusement un ballon de stockage 7 de l'eau provenant d'une boucle de récupération d'énergie 8, et une pompe 9 permettant de faire circuler l'eau provenant dudit ballon de stockage 7 vers la partie primaire d'un deuxième échangeur 10, nommé ci-après échangeur de préchauffage 10, et de boucler sur celui-ci,
- un circuit secondaire 11 comportant une boucle d'ECS 12 (ECS : eau chaude sanitaire), une pompe de bouclage 13 assurant la circulation de l'eau chaude sanitaire sur toute la boucle d'ECS 12, et une entrée d'eau froide 14, provenant classiquement du réseau d'eau de ville (EV), ladite eau froide passant, via des première, deuxième et troisième branches 15A, 15B et 15C, d'abord dans le circuit secondaire de l'échangeur de préchauffage 10 du deuxième circuit primaire 6 pour être préchauffée, puis dans le circuit secondaire de l'échangeur de chauffage 5 du premier circuit primaire 2 pour arriver à la température de départ réglementaire de l'ECS, avant d'être distribuée dans ladite boucle d'ECS 12 au point de distribution 16 par la troisième branche 15C du circuit secondaire 11.

On désigne ici par "départ ECS" la zone située en aval du point de distribution 16 et par "retour ECS" la zone située en amont dudit point de distribution 16.

Les première, deuxième et troisième branches 15A, 15B et 15C du circuit secondaire 11 sont respectivement disposées entre l'entrée d'eau froide 14 et l'entrée du circuit secondaire de l'échangeur de préchauffage 10, entre la sortie du circuit secondaire de l'échangeur de préchauffage 10 et l'entrée du circuit secondaire de l'échangeur de chauffage 5, et entre la sortie du circuit secondaire de l'échangeur de chauffage 5 et le point de distribution 16 sur la boucle d'ECS 12.

Le premier circuit primaire 2 comporte, en outre, une vanne mélangeuse 17 à trois voies disposée entre la sortie du dispositif de production d'eau chaude 3 et l'entrée du circuit primaire de l'échangeur de chauffage 5, et gérant la puissance utile de l'échangeur de chauffage 5 en faisant recirculer en plus ou moins grande proportion une partie de l'eau provenant de la sortie du circuit primaire dudit échangeur de chauffage 5 sur lui-même, de sorte à faire varier la température de l'eau à l'entrée dudit circuit primaire.

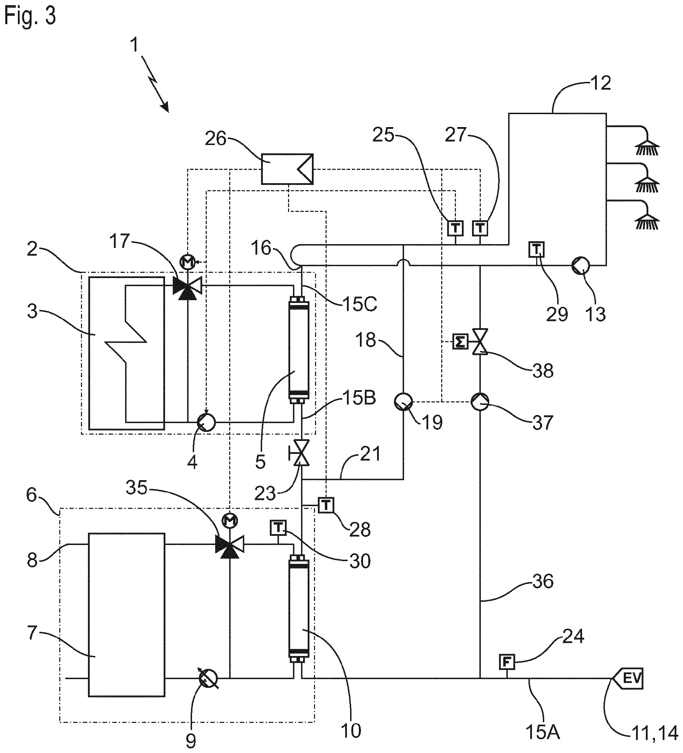

De même, on comprend bien que le deuxième circuit primaire 6 pourra également comporter, en outre, une vanne mélangeuse 35 (Cf. figure 3) à trois voies disposée entre la sortie du ballon de stockage 7 et l'entrée du circuit primaire de l'échangeur de préchauffage 10, et gérant la puissance utile de dernier en faisant recirculer en plus ou moins grande proportion une partie de l'eau provenant de la sortie du circuit primaire dudit échangeur de préchauffage 10 sur lui-même, de sorte à faire varier la température de l'eau à l'entrée dudit circuit primaire.

La boucle de récupération d'énergie 8 permet de récupérer des calories pour chauffer l'ECS, partout où cela est possible et notamment au niveau des groupes froids (Climatisation, frigo ...) ou encore de panneaux solaires.

L'Homme du Métier comprend bien que, dans le cas d'une boucle de récupération d'énergie 8 de grande longueur, par exemple une boucle de récupération d'énergie 8 mise en œuvre au niveau des groupes de climatisation d'un grand bâtiment, le réseau de ladite boucle de récupération d'énergie 8 fera office de ballon de stockage 7 compte tenu du volume et de l'inertie du liquide contenu dans ledit réseau. Dans ce cas, la mise en place d'un ballon de stockage 7 à proprement parler dans le deuxième circuit primaire 6 n'est donc pas nécessaire et ledit deuxième circuit primaire 6 sera alimenté en eau par la boucle de récupération d'énergie 8.

La pompe 9 du deuxième circuit primaire 6 est de préférence à débit variable pour adapter le fonctionnement du deuxième circuit primaire 6 au besoin en ECS.

L'installation 1 de production d'ECS comporte également un module de recyclage 18 comprenant une pompe de recirculation 19 permettant de prélever, en aval dudit point de distribution 16, une partie de l'ECS de la boucle d'ECS 12 pour permettre une circulation permanente d'ECS dans le circuit secondaire de l'échangeur de chauffage 5 ou de l'échangeur de préchauffage 10, afin d'éviter l'entartrage de l'échangeur de chauffage 5 et de combattre les pertes thermiques sur la boucle ECS 12, mais éventuellement pour envoyer ponctuellement de l'eau à 60°C dans l'échangeur de préchauffage 10 pour assurer l'absence de développement de légionnelles dans celui-ci.

Pour cela, le module de recyclage 18 comprend une vanne 20 trois voies disposée en aval de ladite pompe de recirculation 19 et permettant d'orienter le débit, provenant de ladite pompe de recirculation 19, vers le circuit secondaire de l'échangeur de chauffage 5, via une première branche 21 se raccordant à la deuxième branche 15B du circuit secondaire 11, ou bien vers le circuit secondaire de l'échangeur de préchauffage 10, via une deuxième branche 22 se raccordant à la première branche 15A du circuit secondaire 11.

Le module de recyclage 18 est associé à une vanne d'équilibrage de débit 23 disposée entre l'entrée du circuit secondaire de l'échangeur de chauffage 5 et la première branche 21 dudit module de recyclage 18 et permettant de contrôler le débit de recirculation de l'ECS dans le circuit secondaire dudit échangeur de chauffage 5, afin d'assurer une vitesse minimale de circulation pour garantir le non-entartrage de ce dernier.

Par ailleurs, l'installation 1 de production d'ECS, selon l'invention, comporte un fluxostat 24 ou tout autre dispositif disposé à l'aval de l'entrée d'eau froide 14 du circuit secondaire 11 et permettant de déterminer si on est en période de puisage, c'est-à-dire si de l'eau froide arrive par ladite entrée d'eau froide 14, afin d'optimiser le fonctionnement de l'installation 1 de production d'ECS, mais également de garantir la sécurité de cette dernière. En effet, si ledit fluxostat 24 ne détecte plus d'arrivée d'eau froide, il coupe la circulation de la pompe 9 du deuxième circuit primaire 6 pour éviter de réchauffer la boucle de récupération d'énergie 8. Il permet également l'ouverture de la vanne 20 trois voies du module de recyclage 18 pour envoyer de l'eau à 60 °C provenant de la boucle d'ECS 12 dans l'échangeur de préchauffage 10, selon une périodicité définie, afin de garantir le non-développement de légionnelles.

De même, pour éviter les risques de brûlures des utilisateurs de l'ECS, l'installation 1 de production d'ECS comporte avantageusement un thermostat de sécurité 25 disposé en aval du point de distribution 16 sur la boucle d'ECS 12, ledit thermostat de sécurité 25 coupant la pompe 4 du premier circuit primaire 2 et fermant la vanne mélangeuse 17 dudit premier circuit primaire 2 en cas de surchauffe de l'ECS dans ladite boucle d'ECS 12.

Par ailleurs, pour garantir un fonctionnement optimal, l'installation 1 de production d'ECS comprend avantageusement une régulation 26 permettant de gérer les fonctions suivantes :
- ouverture de la vanne mélangeuse 17 dudit premier circuit primaire 2 afin de gérer la puissance utile de l'échangeur de chauffage 5 en fonction de la température de l'ECS dans la boucle d'ECS 12 donnée par une sonde de température départ ECS 27 disposée à l'aval du point de distribution 16 sur ladite boucle d'ECS 12,
- gestion éventuelle du débit de la pompe 9 du deuxième circuit primaire 6 en fonction de la température de sortie de l'échangeur de préchauffage 10 donnée par une sonde de température 28 disposée à l'aval de la sortie du circuit secondaire dudit échangeur de préchauffage 10, de préférence entre cette dernière et la première branche 21 dudit module de recyclage 18,
- gestion de l'énergie pour le réchauffage de la boucle d'ECS 12 (car ce réchauffage représente une très grosse part de la consommation énergétique dans les installations où il y a une boucle d'ECS 12) en agissant sur débit de la pompe 9 du deuxième circuit primaire 6 et sur l'orientation de la vanne 20 trois voies du module de recyclage 18 en fonction de la température de retour ECS dans la boucle d'ECS 12 donnée par une sonde de température 29 disposée à l'amont du point de distribution 16 et de la température à l'entrée du circuit primaire de l'échangeur de préchauffage 10 donnée par la sonde de température 30.

Avec une installation 1 de production d'ECS ainsi configurée, trois modes de fonctionnement peuvent être envisagés.

Ainsi, selon un premier mode de fonctionnement de l'installation 1 de production d'ECS correspondant à une période de puisage, l'eau froide arrive par l'entrée d'eau froide 14 du circuit secondaire 11, passe dans le circuit secondaire de l'échangeur de préchauffage 10 où elle est préchauffée jusqu'à une température intermédiaire, puis se mélange à l'ECS issue du module de recyclage 18. Ensuite, ce mélange va entrer dans le circuit secondaire de l'échangeur de chauffage 5 où il sera réchauffé, la vanne d'équilibrage de débit 23 assurant alors un débit constant dans ledit échangeur de chauffage 5. Enfin, à la sortie de l'échangeur de chauffage 5, l'eau chauffée rejoint le retour de la boucle d'ECS 12 pour former le départ ECS.

Durant ce mode de fonctionnement, la régulation 26 assure une température de départ ECS réglementaire en agissant sur l'ouverture de la vanne mélangeuse 17 dudit premier circuit primaire 2 afin d'adapter aux besoins la puissance utile de l'échangeur de chauffage 5, le fluxostat 24 indique lui la présence d'un débit d'eau froide au niveau de l'entrée d'eau froide 14 du circuit secondaire 11, la pompe 9 du deuxième circuit primaire 6 fonctionne et fait circuler l'eau provenant dudit ballon de stockage 7 vers la partie primaire de l'échangeur de préchauffage 10, et la vanne 20 trois voies du module de recyclage 18 empêche que l'eau de ce dernier ne circule dans l'échangeur de préchauffage 10.

De plus, selon un deuxième mode de fonctionnement de l'installation 1 de production d'ECS correspondant à une période de non-puisage, c'est-à-dire sans arrivée d'eau froide, avec une température de retour ECS supérieure à la température à l'entrée du circuit primaire de l'échangeur de préchauffage 10, le fluxostat 24 indique l'absence de débit, la pompe 9 du deuxième circuit primaire 6 s'arrête pour éviter de réchauffer la boucle de récupération d'énergie 8, la vanne 20 trois voies du module de recyclage 18 s'ouvre régulièrement pour envoyer l'eau dudit module de recyclage 18 dans l'échangeur de préchauffage 10 et ainsi éviter le développement de légionnelles.

Durant ce mode de fonctionnement, l'eau dudit module de recyclage 18 passe ensuite également dans l'échangeur de chauffage 5 et la vanne mélangeuse 17 dudit premier circuit primaire 2 s'ouvre plus ou moins pour combattre les déperditions thermiques sur la boucle d'ECS 12.

De plus, selon un troisième mode de fonctionnement de l'installation 1 de production d'ECS correspondant également à une période de non-puisage, mais avec une température de retour ECS inférieure à la température à l'entrée du circuit primaire de l'échangeur de préchauffage 10, le fluxostat 24 indique l'absence de débit, mais la pompe 9 du deuxième circuit primaire 6 est en marche et la vanne 20 trois voies du module de recyclage 18 oriente le débit de la boucle d'ECS 12 vers le circuit secondaire de l'échangeur de préchauffage 10 pour utiliser l'énergie de la boucle de récupération d'énergie 8 afin de réchauffer la boucle d'ECS 12 et ainsi économiser l'énergie provenant de la production d'eau chaude 3.

On comprend bien que l'installation 1 de production d'ECS, selon l'invention, présente les avantages suivants :
- l'installation 1 utilise une boucle de récupération d'énergie 8 pour préchauffer de l'ECS et ainsi réaliser des économies significatives sur la consommation énergétique de ladite installation 1,
- chacun des échangeurs de chauffage 5 et/ou de préchauffage 10 est associé à un module de recyclage 18 qui permet de garantir leur non entartrage grâce à la circulation permanente à une vitesse minimale,
- le module de recyclage 18 permet également, pour assurer la fonction réchauffage de la boucle d'ECS 12, de ne faire passer qu'une partie de l'eau de la boucle d'ECS 12 dans les échangeurs de chauffage 5 et/ou de préchauffage 10 et de ne pas surcharger la pompe de bouclage 13 de la boucle d'ECS 12,
- l'intégration d'une vanne 20 trois voies dans le module de recyclage 18 permet de résoudre le risque de développement de légionnelles dans l'échangeur de préchauffage 10. En effet, en fonctionnement normal, si la température à l'intérieure de ce dernier est inférieure à 55°C, l'injection ponctuelle d'eau plus chaude (55°C ou plus) permet alors de stopper le développement de légionnelles.

Par ailleurs, on comprend bien que l'eau circulant dans les premier et deuxième circuits primaires 2,6 pourra être remplacée par un fluide caloporteur d'un tout autre type sans sortir du cadre de la présente invention.

En outre, les échangeurs de chauffage 5 et/ou de préchauffage 10 sont avantageusement du type échangeur thermique à spirale tel que, par exemple, celui décrit dans la demande de brevet FR 2 874 080 déposée au nom de la Demanderesse. De tels échangeurs sont particulièrement intéressants car ils possèdent une structure originale qui permet à l'eau chaude sanitaire de circuler dans un circuit spiralé monocanal, leur conférant ainsi des propriétés anti-entartrage.

Enfin, l'Homme du Métier n'aura aucune difficulté à dimensionner et mettre en place sur l'installation 1 de production d'ECS des équipements tels que, par exemple, des clapets anti-retour, des évacuations ou encore des purges, nécessaires au bon fonctionnement de ladite installation 1 de production d'ECS.

### Description d'autres modes de réalisation

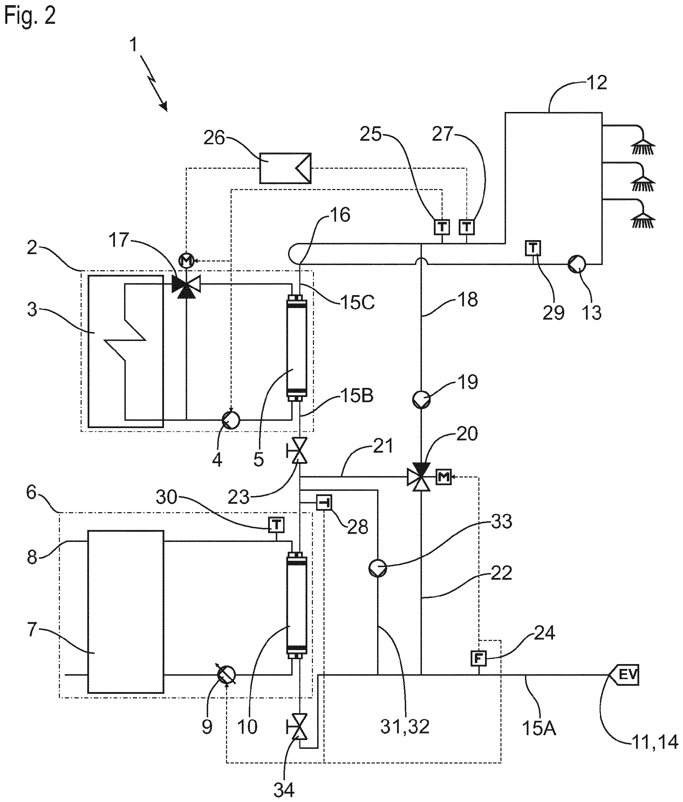

Selon une première variante de réalisation représentée à la figure 2, en cas d'eau très calcaire, l'installation 1 de production d'ECS comprend, en plus, un module de recyclage complémentaire 31 sur l'échangeur de préchauffage 10, afin d'assurer un débit de circulation minimum dans celui-ci.

Ce module de recyclage complémentaire 31 comprend une branche 32 reliant entre elles les première et deuxième branches 15A, 15B du circuit secondaire 11 respectivement en aval de la deuxième branche 22 et en amont de la première branche 21 du module de recyclage 18, une pompe de recirculation 33 disposée sur ladite branche 32 du module de recyclage complémentaire 31 et permettant de prélever de l'eau préchauffée en aval de l'échangeur de préchauffage 10 pour permettre une circulation permanente de cette eau dans le circuit secondaire dudit échangeur de préchauffage 10, afin d'éviter l'entartrage de ce dernier.

En outre, le module de recyclage complémentaire 31 est associé de préférence à une vanne d'équilibrage de débit 34 disposée à l'entrée du circuit secondaire de l'échangeur de préchauffage 10 et permettant de contrôler le débit de recirculation dans le circuit secondaire dudit échangeur de préchauffage 10.

Selon une autre variante de réalisation non représentée, la pompe 4 et la vanne mélangeuse 17 à trois voies du premier circuit primaire 2 sont respectivement remplacées par une pompe à débit variable et par une vanne deux voies, la régulation de la température de départ dans la boucle d'ECS 12 étant alors obtenue en jouant sur le débit de la pompe à débit variable et l'ouverture de la vanne deux voies. On peut également mettre une pompe à débit variable en conservant la vanne mélangeuse 17 à trois voies, mais il faut alors ajouter une vanne qui ferme la voie devenue inutile.

Enfin, en référence à la figure 3 et selon une dernière variante de réalisation, l'installation 1 de production d'ECS comprend, en plus, un module de choc thermique interne 36 permettant de faire circuler de l'eau provenant de la boucle d'ECS 12 dans le circuit secondaire de l'échangeur de chauffage 5 du premier circuit primaire 2, dans le circuit secondaire de l'échangeur de préchauffage 10 du deuxième circuit primaire 2, puis dans l'entrée d'eau froide, et enfin retour dans la boucle d'ECS 12.

Ce fonctionnement en sens inverse à celui décrit précédemment permet de chauffer l'eau dans l'échangeur de chauffage 5 pour élever la température de l'eau au niveau de l'échangeur de préchauffage 10, afin d'éviter le développement de légionnelles dans ce dernier. L'opération de choc thermique interne dans l'installation 1 de production d'ECS se déroulera avantageusement la nuit, période durant laquelle le besoin en ECS est quasiment nul.

Ledit module de choc thermique interne 36 comprend avantageusement une pompe de circulation 37 et une vanne motorisée 38 disposées entre la première branche 15A du circuit secondaire 11 et la boucle d'ECS 12 en amont du point de distribution 16, et permettant d'orienter le débit provenant du circuit secondaire de l'échangeur de préchauffage 10 vers la boucle d'ECS 12 puis le circuit secondaire de l'échangeur de chauffage 5 pour réaliser le choc thermique de ces circuits.

La régulation 26 permet alors de réguler la vitesse de rotation de ladite pompe de circulation 37, afin de réguler la température de l'eau au niveau de l'échangeur de préchauffage 10 et de la boucle d'ECS 12.

Avec cette dernière variante de réalisation, on comprend alors bien que le module de recyclage 18 ne permet que d'éviter l'entartrage de l'échangeur de chauffage 5 et de combattre les pertes thermiques sur la boucle ECS 12. Pour cela, ledit module de recyclage 18 ne comprend alors qu'une pompe de recirculation 19 permettant de prélever, en aval dudit point de distribution 16, une partie de l'ECS de la boucle d'ECS 12 pour permettre une circulation permanente d'ECS dans le circuit secondaire de l'échangeur de chauffage 5

### Possibilité d'application industrielle

On comprend bien que l'installation 1 de production d'ECS conforme à l'invention est de préférence utilisée pour des bâtiments du type, par exemple, cliniques ou hôpitaux. Toutefois, il est évident que cette installation 1 de production d'ECS peut être adaptée et utilisée pour d'autres types de bâtiments tels que, par exemple, des hôtels ou lycées.

Enfin, il va de soi que les exemples de l'installation 1 de production d'ECS conformes à l'invention qui viennent d'être décrits ne sont que des illustrations particulières, en aucun cas limitatives de l'invention qui est définie dans les revendications.

## Revendications

1. Installation (1) de production d'eau chaude sanitaire (ECS) comportant au moins :
- un premier échangeur thermique (5) et un deuxième échangeur thermique (10),
- un premier circuit primaire (2) comportant un dispositif de production d'eau chaude (3) et une pompe (4) permettant de faire circuler de l'eau chaude dans la partie primaire dudit premier échangeur thermique (5), nommé ci-après échangeur de chauffage (5),
- un deuxième circuit primaire (6) comprenant une bouche de récupération d'énergie (8) et étant alimenté en eau provenant de ladite boucle de récupération d'énergie (8), le deuxième circuit primaire (6) comprenant en outre une pompe (9) permettant de faire circuler l'eau vers la partie primaire dudit deuxième échangeur (10), nommé ci-après échangeur de préchauffage (10), et de boucler sur celui-ci, et
- un circuit secondaire (11) comportant une boucle d'ECS (12), une pompe de bouclage (13) assurant la circulation de l'eau chaude sanitaire sur toute la boucle d'ECS (12), et une entrée d'eau froide (14), ladite eau froide passant d'abord, via une première branche (15A), dans le circuit secondaire de l'échangeur de préchauffage (10) du deuxième circuit primaire (6) pour être préchauffée, puis, via une deuxième branche (15B), dans le circuit secondaire de l'échangeur de chauffage (5) du premier circuit primaire (2) pour arriver à la température réglementaire de l'ECS, avant d'être distribuée dans ladite boucle d'ECS (12) au point de distribution (16) par une troisième branche (15C) du circuit secondaire (11),
ladite installation (1) étant **caractérisée en ce qu'**elle comporte un module de recyclage (18) permettant de prélever, en aval dudit point de distribution (16), une partie de l'ECS de la boucle d'ECS (12) pour permettre une circulation permanente d'ECS dans le circuit secondaire de l'échangeur de chauffage (5).

2. Installation (1) selon la revendication 1 **caractérisée en ce que** le module de recyclage (18) permet également d'envoyer ponctuellement une partie de l'ECS de la boucle d'ECS (12) dans l'échangeur de préchauffage (10).

3. Installation (1) selon les revendications 1 et 2 **caractérisée en ce que** le module de recyclage (18) comprend une pompe de recirculation (19) et une vanne (20) trois voies disposée en aval de ladite pompe de recirculation (19) et permettant d'orienter le débit provenant de cette dernière vers le circuit secondaire de l'échangeur de chauffage (5), via une première branche (21) se raccordant à la deuxième branche (15B) du circuit secondaire (11), ou bien vers le circuit secondaire de l'échangeur de préchauffage (10), via une deuxième branche (22) se raccordant à la première branche (15A) du circuit secondaire (11).

4. Installation (1) selon la revendication 1 **caractérisée en ce qu'**elle comporte un module de choc thermique interne (36) permettant de faire circuler de l'eau provenant de la boucle d'ECS (12) dans le circuit secondaire de l'échangeur de chauffage (5) du premier circuit primaire (2), dans le circuit secondaire de l'échangeur de préchauffage (10) du deuxième circuit primaire (2), puis dans l'entrée d'eau froide, et enfin retour dans la boucle d'ECS (12).

5. Installation (1) selon l'une quelconques des revendications 1 à 4 **caractérisée en ce que** le module de recyclage (18) est associé à une vanne d'équilibrage de débit (23) disposée entre l'entrée du circuit secondaire de l'échangeur de chauffage (5) et la première branche (21) dudit module de recyclage (18) et permettant de contrôler le débit de recirculation de l'ECS dans le circuit secondaire dudit échangeur de chauffage (5).

6. Installation (1) selon l'une quelconque des revendications 1 à 5, **caractérisée en ce qu'**elle comporte un fluxostat (24), ou tout autre dispositif, disposé à l'aval de l'entrée d'eau froide (14) du circuit secondaire (11) et permettant de déterminer si de l'eau froide arrive par ladite entrée d'eau froide (14).

7. Installation (1) selon l'une quelconque des revendications 1 à 6, **caractérisée en ce que** le premier circuit primaire (2) comporte une vanne mélangeuse (17) disposée entre la sortie du dispositif de production d'eau chaude (3) et l'entrée du circuit primaire de l'échangeur de chauffage (5), et gérant la puissance utile de l'échangeur de chauffage (5) en faisant recirculer en plus ou moins grande proportion une partie de l'eau provenant de la sortie du circuit primaire dudit échangeur de chauffage (5) sur lui-même, de sorte à faire varier la température de l'eau à l'entrée dudit circuit primaire.

8. Installation (1) selon la revendication 7, **caractérisée en ce qu'**elle comporte un thermostat de sécurité (25) disposé en aval du point de distribution (16) sur la boucle d'ECS (12), ledit thermostat de sécurité (25) coupant la pompe (4) du premier circuit primaire (2) et fermant la vanne mélangeuse (17) dudit premier circuit primaire (2) en cas de surchauffe de l'ECS dans ladite boucle d'ECS (12).

9. Installation (1) selon l'une quelconque des revendications 7 ou 8, **caractérisée en ce qu'**elle comporte une régulation (26) permettant de gérer au moins :
- l'ouverture de la vanne mélangeuse (17) dudit premier circuit primaire (2) en fonction de la température de départ ECS dans la boucle d'ECS (12),
- le débit de la pompe (9) du deuxième circuit primaire (6) en fonction de la température de sortie de l'échangeur de préchauffage (10).

10. Installation (1) selon l'une quelconque des revendications 1 à 9 **caractérisée en ce qu'**elle comporte un module de recyclage complémentaire (31) sur l'échangeur de préchauffage (10), afin d'assurer un débit de circulation minimum dans celui-ci.

11. Installation (1) selon la revendication 10 **caractérisée en ce que** le module de recyclage complémentaire (31) comprend une branche (32) reliant entre elles les première et deuxième branches (15A, 15B) du circuit secondaire (11) respectivement en aval de la deuxième branche (22) et en amont de la première branche (21) du module de recyclage (18), une pompe de recirculation (33) disposée sur ladite branche (32) du module de recyclage complémentaire (31) et permettant de prélever de l'eau préchauffée en aval de l'échangeur de préchauffage (10) pour permettre une circulation permanente de cette eau dans le circuit secondaire dudit échangeur de préchauffage (10), afin d'éviter l'entartrage de ce dernier.

12. Installation (1) selon la revendication 11 **caractérisée en ce que** le module de recyclage complémentaire (31) est associé de préférence à une vanne d'équilibrage de débit (34) disposée à l'entrée du circuit secondaire de l'échangeur de préchauffage (10) et permettant de contrôler le débit de recirculation dans le circuit secondaire dudit échangeur de préchauffage (10).

## Patentansprüche

1. Sanitäranlage (1) zur Erzeugung von Warmwasser (ECS) mindestens Folgendes beinhaltend:
- einen ersten Wärmetauscher (5) und einen zweiten Wärmetauscher (10),
- einen ersten Primärkreis (2), der eine Vorrichtung zur Erzeugung von Warmwasser (3) und eine Pumpe (4) beinhaltet, die es ermöglicht, Warmwasser im Primärteil des ersten Wärmetauschers (5), nachfolgend Heiztauscher (5) genannt, zirkulieren zu lassen,
- einen zweiten Primärkreis (6), der eine Energierückgewinnungsöffnung (8) umfasst, und mit Wasser versorgt wird, das aus der Energierückgewinnungsschleife (8) stammt, wobei der zweite Primärkreis (6) weiter eine Pumpe (9) umfasst, die es ermöglicht, das Wasser zum Primärteil des zweiten Wärmetauschers (10), nachfolgend Vorheiztauscher (10) genannt, zirkulieren zu lassen, und in diesem zu verschleifen, und
- einen Sekundärkreis (11), der eine ECS-Schleife (12) beinhaltet, wobei eine Zirkulationspumpe (13) für die Zirkulation des Warmwassers über die gesamte ESC-Schleife (12) sorgt, und einen Kaltwassereingang (14), wobei das Kaltwasser zuerst über einen ersten Zweig (15A) in dem Sekundärkreis des Vorheiztauschers (10) des zweiten Primärkreises (6) verläuft, um vorgeheizt zu werden, danach über einen zweiten Zweig (15B) in dem Sekundärkreis des Heiztauschers (5) des ersten Primärkreises (2) um auf die regulatorische Temperatur des ECS zu kommen, bevor es in der ECS Schleife (12) am Verteilungspunkt (16) durch einen dritten Zweig (15C) des Sekundärkreises (11) verteilt wird,
wobei die Sanitäranlage (1) **dadurch gekennzeichnet ist, dass** sie ein Recyclingmodul (18) beinhaltet, das es ermöglicht, stromabwärts des Verteilungspunktes (16) einen Teil des ECS aus der ESC-Schleife (12) zu entnehmen, um eine dauerhafte Zirkulation von ECS in dem Sekundärkreis des Heiztauschers (5) zu ermöglichen.

2. Sanitäranlage (1) nach Anspruch 1, **dadurch gekennzeichnet, dass** das Recyclingmodul (18) es ebenfalls ermöglicht, punktuell einen Teil des ECS aus der ECS-Schleife (12) in den Vorheiztauscher (10) zu schicken.

3. Sanitäranlage (1) nach den Ansprüchen 1 und 2, **dadurch gekennzeichnet, dass** das Recyclingmodul (18) eine Umwälzpumpe (19) und ein Drei-Wege-Ventil (20) umfasst, das stromabwärts der Umwälzpumpe (19) angeordnet ist, und es ermöglicht, den Volumenstrom, der aus letzterem stammt, über einen ersten Zweig (21) zum Sekundärkreis des Heiztauschers (5) zu orientieren, der an den zweiten Zweig (15B) des Sekundärkreises (11) angeschlossen ist, oder aber zum Sekundärkreis des Vorheiztauschers (10), über einen zweiten Zweig (22), der an den ersten Zweig (15A) des Sekundärkreises (11) angeschlossen ist.

4. Sanitäranlage (1) nach Anspruch 1, **dadurch gekennzeichnet, dass** sie ein internes Temperaturschockmodul (36) beinhaltet, das es ermöglicht, Wasser, das aus der ESC-Schleife (12) stammt, in dem Sekundärkreis des Heiztauschers (5) des ersten Primärkreises (2), in dem Sekundärkreis des Vorheiztauschers (10) des zweiten Primärkreises (2), danach in den Kaltwassereingang und schließlich zurück in die ECS-Schleife (12) zirkulieren zu lassen.

5. Sanitäranlage (1) nach einem der Ansprüche 1 bis 4, **dadurch gekennzeichnet, dass** das Recyclingmodul (18) einem Volumenstromausgleichsventil (23) zugewiesen ist das zwischen dem Eingang des Sekundärkreises des Heiztauschers (5) und dem ersten Zweig (21) des Recyclingmoduls (18) angeordnet ist, und es ermöglicht, den Umwälzvolumenstrom des ESC in dem Sekundärkreis des Heiztauschers (5) zu kontrollieren.

6. Sanitäranlage (1) nach einem der Ansprüche 1 bis 5, **dadurch gekennzeichnet, dass** sie einen Strömungswächter (24) oder jede andere Vorrichtung beinhaltet, der/die stromabwärts des Kaltwassereingangs (14) des Sekundärkreises (11) angeordnet ist, und es ermöglicht, zu bestimmen, ob Kaltwasser durch den Kaltwassereingang (14) eintrifft.

7. Sanitäranlage (1) nach einem der Ansprüche 1 bis 6, **dadurch gekennzeichnet, dass** der erste Primärkreis (2) ein Mischventil (17) beinhaltet, das zwischen dem Ausgang der Warmwassererzeugungsvorrichtung (3) und dem Eingang des Primärkreises des Heiztauschers (5) angeordnet ist, und die Nutzleistung des Heiztauschers (5) verwaltet, indem es in mehr oder weniger großer Proportion einen Teil des Wassers, das von dem Ausgang des Primärkreises des Heiztauschers (5) kommt, um sich selbst umwälzen lässt, um die Temperatur des Wassers am Eingang des Primärkreises variieren zu lassen.

8. Sanitäranlage (1) nach Anspruch 7, **dadurch gekennzeichnet, dass** sie einen Sicherheitsthermostat (25) beinhaltet, der stromabwärts des Verteilungspunktes (16) auf der ECS-Schleife (12) angeordnet ist, wobei der Sicherheitsthermostat (25) im Fall von Überhitzung des ECS in der ECS-Schleife (12) die Pumpe (4) des ersten Primärkreises (2) abschaltet und das Mischventil (17) des ersten Primärkreises (2) schließt.

9. Sanitäranlage (1) nach einem der Ansprüche 7 oder 8, **dadurch gekennzeichnet, dass** sie eine Regulierung (26) beinhaltet, die es ermöglicht, mindestens Folgendes zu verwalten:
- die Öffnung des Mischventils (17) des ersten Primärkreises (2) in Abhängigkeit von der ECS-Starttemperatur in der ECS-Schleife (12),
- den Volumenstrom der Pumpe (9) des zweiten Primärkreises (6) in Abhängigkeit von der Ausgangstemperatur des Vorheiztauschers (10).

10. Sanitäranlage (1) nach einem der Ansprüche 1 bis 9, **dadurch gekennzeichnet, dass** sie ein ergänzendes Recyclingmodul (31) auf dem Vorheiztauscher (10) beinhaltet, um für einen Mindestzirkulationsvolumenstrom in demselben zu sorgen.

11. Sanitäranlage (1) nach Anspruch 10, **dadurch gekennzeichnet, dass** das ergänzende Recyclingmodul (31) einen Zweig (32) umfasst, der den ersten und zweiten Zweig (15A, 15B) des Sekundärkreises (11) jeweils stromabwärts des zweiten Zweiges (22) und stromaufwärts des ersten Zweiges (21) des Recyclingmoduls (18) miteinander verbindet, eine Umwälzpumpe (33), die auf dem Zweig (32) des ergänzenden Recyclingmoduls (31) angeordnet ist, und es ermöglicht, vorgeheiztes Wasser stromabwärts des Vorheiztauschers (10) zu entnehmen, um eine permanente Zirkulation dieses Wassers in dem Sekundärkreis des Vorheiztauschers (10) zu ermöglichen, um die Verkalkung dieses letzteren zu vermeiden.

12. Sanitäranlage (1) nach Anspruch 11, **dadurch gekennzeichnet, dass** das ergänzende Recyclingmodul (31) vorzugsweise einem Volumenstromausgleichsventil (34) zugeordnet ist, das am Eingang des Sekundärkreises des Vorheiztauschers (10) angeordnet ist, und es ermöglicht, den Umwälzvolumenstrom in dem Sekundärkreis des Vorheiztauschers (10) zu kontrollieren.

## Claims

1. A facility (1) for producing domestic hot water (DHW), including at least:
- a first heat exchanger (5) and a second heat exchanger (10),
- a first primary circuit (2) including a hot-water production device (3) and a pump (4) for circulating hot water in the primary part of said first heat exchanger (5), hereinafter referred to as a heating exchanger (5),
- a second primary circuit (6) comprising an energy-recovery loop (8) and being supplied with water coming from said energy-recovery loop (8), the second primary circuit (6) further comprising a pump (9) for circulating the water to the primary part of said second exchanger (10), hereinafter referred to as the preheating exchanger (10), and for looping back onto it, and
- a secondary circuit (11) including a DHW loop (12), a looping pump (13) providing the circulation of the domestic hot water over the entire DHW loop (12), and a cold-water inlet (14), said cold water first of all passing, via a first branch (15A), into the secondary circuit of the preheating exchanger (10) of the second primary circuit (6) in order to be preheated, and then, via a second branch (15B), into the secondary circuit of the heating exchanger (5) of the first primary circuit (2) in order to arrive at the set temperature of the DHW, before being distributed in said DHW loop (12) to the distribution point (16) by a third branch (15C) of the secondary circuit (11),
said facility (1) being **characterised in that** it includes a recirculation module (18) for taking off, downstream of said distribution point (16), some of the DHW from the DHW loop (12) to allow permanent circulation of DHW in the secondary circuit of the heating exchanger (5).

2. The facility (1) according to claim 1, **characterised in that** the recirculation module (18) also makes it possible to send, in bursts, some of the DHW from the DHW loop (12) into the preheating exchanger (10).

3. The facility (1) according to claims 1 and 2, **characterised in that** the recirculation module (18) comprises a recirculation pump (19) and a three-way valve (20) disposed downstream of said recirculation pump (19) and making it possible to orient the flow coming from the latter to the secondary circuit of the heating exchanger (5), via a first branch (21) connecting to the second branch (15B) of the secondary circuit (11), or to the secondary circuit of the preheating exchanger (10), via a second branch (22) connecting to the first branch (15A) of the secondary circuit (11).

4. The facility (1) according to claim 1, **characterised in that** it includes an internal thermal-shock module (36) for circulating water coming from the DHW loop (12) in the secondary circuit of the heating exchanger (5) of the first primary circuit (2), in the secondary circuit of the preheating exchanger (10) of the second primary circuit (2), then in the cold-water inlet, and finally returning in the DHW loop (12) .

5. The facility (1) according to any one of claims 1 to 4, **characterised in that** the recirculation module (18) is associated with a flow-balancing valve (23) disposed between the inlet of the secondary circuit of the heating exchanger (5) and the first branch (21) of said recirculation module (18) and making it possible to control the recirculation flow of the DHW in the secondary circuit of said heating exchanger (5).

6. The facility (1) according to any one of claims 1 to 5, **characterised in that** it includes a flow switch (24), or any other device, disposed downstream of the cold-water inlet (14) of the secondary circuit (11) and making it possible to determine whether cold water is arriving through said cold-water inlet (14).

7. The facility (1) according to any one of claims 1 to 6, **characterised in that** the first primary circuit (2) includes a mixer valve (17) disposed between the outlet of the hot-water production device (3) and the inlet of the primary circuit of the heating exchanger (5), and managing the useful power of the heating exchanger (5) by recirculating, in a greater or lesser proportion, some of the water coming from the outlet of the primary circuit of said heating exchanger (5) onto itself, so as to vary the temperature of the water at the inlet of said primary circuit.

8. The facility (1) according to claim 7, **characterised in that** it includes a safety thermostat (25) disposed downstream of the distribution point (16) on the DHW loop (12), said safety thermostat (25) cutting off the pump (4) of the first primary circuit (2) and closing the mixer valve (17) of said first primary circuit (2) in the event of overheating of the DHW in said DHW loop (12).

9. The facility (1) according to either one of claims 7 or 8, **characterised in that** it includes a regulator (26) for managing at least:
- the opening of the mixer valve (17) of said first primary circuit (2) according to the DHW starting temperature in the DHW loop (12),
- the output of the pump (9) of the second primary circuit (6) according to the outlet temperature of the preheating exchanger (10).

10. The facility (1) according to any one of claims 1 to 9, **characterised in that** it includes a supplementary recirculation module (31) on the preheating exchanger (10) in order to provide a minimum circulation flow therein.

11. The facility (1) according to claim 10, **characterised in that** the supplementary recirculation module (31) comprises a branch (32) connecting together the first and second branches (15A, 15B) of the secondary circuit (11) respectively downstream of the second branch (22) and upstream of the first branch (21) of the recirculation module (18), a recirculation pump (33) disposed on said branch (32) of the supplementary recirculation module (31) and making it possible to take off preheated water downstream of the preheating exchanger (10) to allow permanent circulation of this water in the secondary circuit of said preheating exchanger (10), in order to prevent furring thereof.

12. The facility (1) according to claim 11, **characterised in that** the supplementary recirculation module (31) is preferably associated with a flow-balancing valve (34) disposed at the inlet of the secondary circuit of the preheating exchanger (10) and making it possible to control the recirculation flow in the secondary circuit of said preheating exchanger (10).
